# EUROPÄISCHE PATENTSCHRIFT

(11) **EP 0 463 300 B1**
(45) Veröffentlichungstag und Bekanntmachung des Hinweises auf die Patenterteilung: **15.11.1995**
(21) Anmeldenummer: 91105366.8
(22) Anmeldetag: 04.04.1991
(51) Int. Cl.: G11B 33/02, G11B 23/02, G11B 33/00

(54) **Lagerung der Kassettenfachklappe eines Video-Gerätes**
Bearing of the lid of a cassette compartment for a video-recorder
Positionnement du couvercle du compartiment à cassettes d'un appareil vidéo

(30) Priorität: 22.06.1990 DE 9006983 U
(43) Veröffentlichungstag der Anmeldung: 02.01.1992
(73) Patentinhaber: Grundig E.M.V. Elektro-Mechanische Versuchsanstalt Max Grundig GmbH & Co. KG, 90762 Fürth (DE)
(72) Erfinder: Kutrowatz, Johann, GRUNDIG E.M.V., Max Grundig, W-8510 Fuerth (DE)

(56) Entgegenhaltungen:
- DE-A- 3 644 284
- US-A- 4 785 365
- PATENT ABSTRACTS OF JAPAN vol. 13, no. 73 (P-830)(3421) 20 February 1989

## Beschreibung

Die Erfindung betrifft ein Kassettenfach für ein Videogerät mit einer Kassettenfachklappe, deren Lagerung aus Lagerzapfen, Lagerbett und Drehfeder mit zwei Federschenkeln besteht gemäß dem Oberbegriff des Anspruchs 1.

Es ist bekannt, Lagerungen von beweglichen Teilen, Klappen oder dergleichen durch am beweglichen Teil angespritzte Lagerzapfen auszuführen, die zusammen mit einem Lagerbett die Drehlagerung bilden. Bekannt ist ebenfalls, zum Andrücken des beweglichen Teils an einen Anschlag in der Ruhelage des Teils, eine Drehfeder zu verwenden. Diese Drehfeder muß in einem gespannten Zustand so angeordnet sein, daß der eine Federschenkel an dem beweglichen Teil und der andere Federschenkel an dem ruhenden, das Lagerbett beinhaltenden Teil anliegt.

Diese Art der Lagerung hat den Nachteil, daß das Vorspannen der Drehfeder meist erst im montierten Zustand der Lagerteile erfolgen kann, was oft, oftmals bedingt durch enge räumliche Verhältnisse, nur unter erheblicher Behinderung erfolgen kann. Die Folge ist eine Verteuerung des Montagevorgangs.

Der Erfindung liegt die Aufgabe zugrunde, den genannten Nachteil zu vermeiden, und damit eine einfachere und billigere Montagemöglichkeit zu schaffen.

Diese Aufgabe wird durch die im Anspruch 1 gekennzeichneten Merkmale gelöst.

Das Vorspannen der Drehfeder erfolgt bereits vor der Montage der Klappe in das Gehäuse. Die Lagerstelle der Drehfeder ist dabei noch leicht zugänglich, das Vorspannen also relativ einfach. Die Drehfeder wird dabei um einen Betrag vorgespannt der etwas über dem liegt, den die Drehfeder in ihrem Arbeitsbereich haben muß. Der an der äußeren Begrenzung der Lagerseite liegende Federschenkel wird um den notwendigen Betrag vorgespannt und hinter einen klappenseitigen Vorsprung gelegt, wodurch die Vorspannung erhalten bleibt. Die von der vorgespannten Drehfeder ausgehende Kraft ist also innerhalb der Klappe geschlossen und kann nicht nach außen wirken. Die Klappe ist damit nach wie vor ein kräftemäßig passives Teil und kann als solches problemlos in das Gehäuse montiert werden. Erst wenn die Klappe mit ihren Lagerbolzen im Lagerbett des Gehäuses liegt und innerhalb ihres Schwenkbereichs bewegt wird, bewirkt eine gehäuseseitige konische Rippe, daß der vorgespannte Federschenkel unter dem klappenseitigen Vorsprung hervorgeschoben wird und sich in entspannender Richtung soweit bewegt, bis er an seinem gehäuseseitigen Anschlag zur Anlage kommt. Die noch vorhandene Restspannung in der Drehfeder reicht aus, um das notwendige Klappenrückstell-Drehmoment aufzubringen.

Die Erfindung wird nachstehend anhand der in den Zeichnungen dargestellten Ausführungsform erläutert.
- Fig. 1: zeigt eine Teilansicht auf eine Klappe mit ihrer Lagerung im Gehäuse, wobei sich auf der nicht gezeichneten Klappenseite eine gleiche oder ähnliche Lagerung wie gezeichnet befindet.
- Fig. 2: zeigt einen Schnitt durch den die Drehfeder tragenden Bereich der Lagerung senkrecht zur Lagerachse.

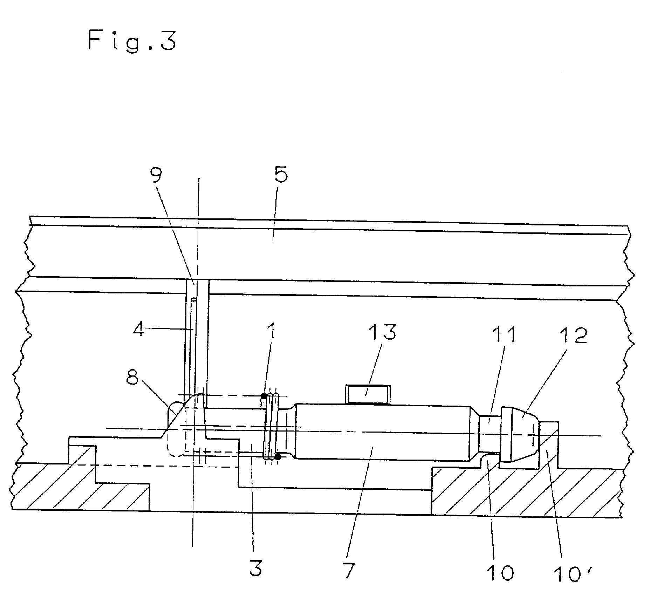

- Fig. 3: zeigt die Lagerung im Schnitt X-X der Figur 1.

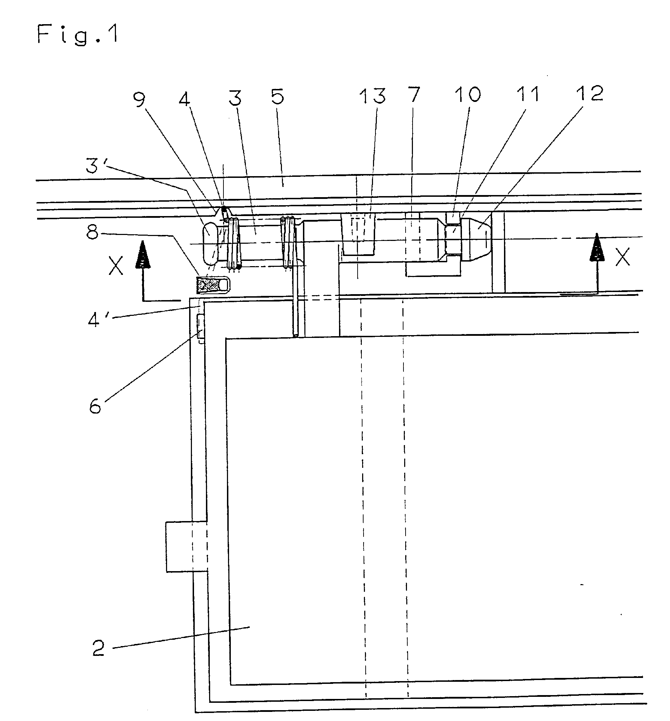

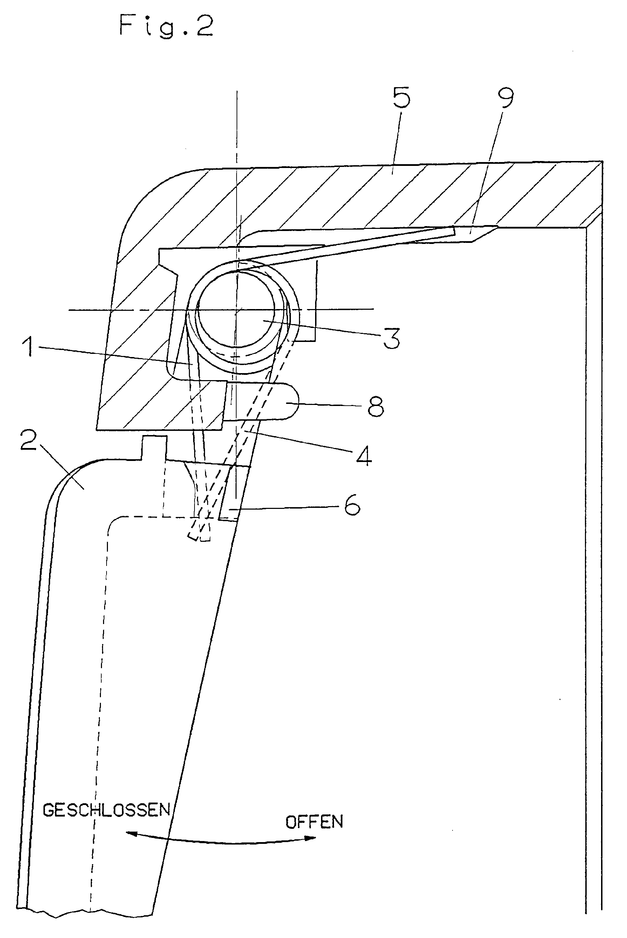

An die Klappe (2) ist der Lagerzapfen (7) angespritzt, der zusammen mit den gehäuseseitigen Teilen (10, 13) die radiale und mit (10, 10′) die axiale Lagerung bildet. Eine Verlängerung (3) des Lagerzapfens (7) zur Klappenaußenseite zu trägt die Drehfeder (1). In Fig. 1 und 2 ist der vorgespannte Federschenkel (4) unter dem klappenseitigen Vorsprung (6) liegend und im teilweise entspannten Zustand in der Vertiefung (9) dargestellt. Die Montage der Klappe (2) mit der vorgespannten Drehfeder (1) in das Gehäuse (5) erfolgt in der offenen Stellung der Klappe (2) (Fig. 2). Ist diese dann in ihre Lagerstellen eingeschoben und wird in ihre geschlossene Stellung gebracht, bewirkt die gehäuseseitige konische Rippe (8), daß der Federschenkel (4) unter dem Vorsprung (6) hervorgeschoben wird und sich bis zur Anlage am Gehäuse (5) entspannt.

## Patentansprüche

1. Kassettenfach für ein Videogerät mit einer Kassettenfachklappe, deren Lagerung aus Lagerzapfen, Lagerbett und Drehfeder mit zwei Federschenkeln besteht,
**dadurch gekennzeichnet, daß**
- sich der Klappe (2) ein von der Klappenseite aus achsparallel zum Lagerzapfen (7) erstreckender Vorsprung (6) befindet, der ein Anlegen des ersten Federschenkels (4) ermöglicht,
- die vorgespannte Drehfeder (1) auf einer Verlängerung (3) des Lagerzapfens (7) gelagert ist,
- der zweite Federschenkel an der beweglichen Klappe (2) anliegt,
- der erste Federschenkel (4′) der vorgespannten Drehfeder (1) zunächst an dem Vorsprung (6) anliegt und
- sich am Gehäuse (5) räumlich zwischen dem Lagerzapfen (7) und dem Vorsprung (6) eine eine Schiefebene aufweisende Rippe (8) befindet, an der bei sich schließender Klappe (2) der erste Federschenkel (4) entlanggleitet und dadurch von seiner Anlage am Vorsprung (6) weggezogen wird und
- der erste Federschenkel (4) bei geschlossener klappe (2) in einer Vertiefung (9) des Gehäuses (5) liegt.

2. Kassettenfach nach Anspruch 1
**dadurch gekennzeichnet, daß**
daß die Verlängerung (3) des Lagerzapfens (7) an ihrem Ende eine Verdickung (3′) aufweist.

3. Kassettenfach nach Anspruch 1,
**dadurch gekennzeichnet,**
daß der Lagerzapfen (7) einen Bereich (11) geringeren Durchmessers aufweist, mit dem er auf einer Lagerrippe (10) des Gehäuses (5) zur Bildung einer ersten radialen Lagerstelle aufliegt, und sich am Gehäuse (5), räumlich in Achsrichtung des Lagerzapfens (7) zur Lagerrippe (10) versetzt, ein Lagersteg (13) befindet, an dem der Lagerzapfen (7) zur Bildung einer zweiten radialen Lagerstelle der Klappe (2) anliegt.

4. Kassettenfach nach Anspruch 1,
**dadurch gekennzeichnet,**
daß eine pilzartige Verdickung (12) des Lagerzapfens (7) in einem Raum zwischen der Lagerrippe (10) und einer zweiten, gehäuseseitigen, im Achsbereich des Lagerzapfens (7) sich befindlichen Rippe (10′) zur Bildung der axialen Sicherung des Lagerzapfens (7) liegt.

## Claims

1. Cassette compartment for a video recorder having a cassette compartment flap whose bearing comprises pivot pin, bearing bed and torsion spring having two spring legs, characterized in that
- a projection (6) which extends from the flap side parallel to the axis of the pivot pin (7) and which makes possible a positioning of the first spring leg (4) is situated on the flap (2),
- the pretensioned torsion spring (1) is mounted on an extension (3) of the pivot pin (7),
- the second spring leg is in contact with the movable flap (2),
- the first spring leg of the pretensioned torsion spring (1) is initially in contact with the projection (6), and
- a rib (8) which has an inclined plane and along which the first spring leg (4) slides when the flap (2) closes and is consequently pulled away from its contact with the projection (6) is situated on the housing (5) spatially between the pivot pin (7) and the projection (6), and
- the first spring leg (4) is situated in a recess (9) of the housing (5) when the flap (2) is closed.

2. Cassette compartment according to Claim 1,
characterized in that the extension (3) of the pivot pin (7) has a thickened section (3) at its end.

3. Cassette compartment according to Claim 1,
characterized in that the pivot pin (7) has a region (11) of smaller diameter by means of which it rests on a bearing rib (10) of the housing (5) to form a first radial bearing point and, spatially displaced in the axial direction of the pivot pin (7) towards the bearing rib (10), there is a bearing ridge (13) with which the pivot pin (7) is in contact in order to form a second radial bearing point of the flap (2).

4. Cassette compartment according to Claim 1,
characterized in that a mushroom-type thickened section (12) of the pivot pin (7) is situated in a space between the bearing rib (10) and the second housing-side rib, situated in the axial region of the pivot pin (7), in order to form the axial locking of the pivot pin (7).

## Revendications

1. Compartiment à cassette pour un appareil vidéo comportant un volet pour le compartiment à cassette, dont le système de support est constitué par des tourillons, un bâti de support et un ressort de torsion comportant deux branches, caractérisé en ce que
- sur le volet (2) est présent un appendice saillant (6), qui s'étend à partir du côté du volet en direction du tourillon (7), parallèlement à l'axe, et qui permet une application de la première branche (4) du ressort,
- le ressort de torsion précontraint (1) est monté sur un prolongement (3) du tourillon (7),
- la seconde branche du ressort s'applique contre le volet mobile (2),
- la première branche (4) du ressort de torsion précontraint (1) s'applique tout d'abord contre l'appendice saillant (6), et
- sur le boîtier (5) est disposée, spatialement entre le tourillon (7) et l'appendice saillant (6), une nervure (8) possédant un plan oblique et sur laquelle la première branche (4) du ressort glisse lorsque le volet (2) se ferme et de ce fait est écartée de son état appliqué contre l'appendice saillant (6), et
- la première branche (4) du ressort s'applique, lorsque le volet (2) est fermé, dans un renfoncement (9) du boîtier (5).

2. Compartiment à cassette selon la revendication 1, caractérisé en ce que le prolongement (3) du tourillon (7) possède un épaississement (3′) au niveau de son extrémité.

3. Compartiment à cassette selon la revendication 1, caractérisé en ce que le tourillon (7) possède une zone (11) de diamètre réduit, par laquelle il s'applique sur une nervure de support (10) du boîtier (5) pour former un premier point de support radial, et que sur le boîtier (5) est disposée, d'une manière décalée spatialement dans la direction de l'axe du tourillon (7) par rapport à la nervure de support (10), une barrette de support (13), contre laquelle le tourillon (7) s'applique pour former un second point de support radial du volet (2).

4. Compartiment à cassette selon la revendication 1, caractérisé en ce qu'un épaississement en forme de champignon (12) du tourillon (7) est situé dans un espace présent entre la nervure de support (10) et une seconde nervure (10′) située sur le boîtier, dans la zone de l'axe du tourillon (7), pour former le système de blocage axial du tourillon (7).
